Europäisches Patentamt

European Patent Office

Office européen des brevets

(19)

(11) Publication number: **0 139 792**
**A1**

(12) # EUROPEAN PATENT APPLICATION

(21) Application number: **83306009.8**

(22) Date of filing: **04.10.83**

(51) Int. Cl.⁴: **B 29 C 37/02**

(43) Date of publication of application:
**08.05.85** Bulletin **85/19**

(84) Designated Contracting States:
**BE DE FR GB IT NL SE**

(71) Applicant: **HUDSON MACHINERY CORPORATION**
**Hudson Industrial Park P.O. Box 831**
**Haverhill Massachusetts 01830(US)**

(72) Inventor: **Tougas, George C.**
**18 Cove Circle**
**Marion Massachusetts 02738(US)**

(74) Representative: **Woodward, John Calvin et al,**
**VENNER SHIPLEY & CO. 368 City Road**
**London EC1V 2QA(GB)**

(54) Apparatus for trimming flash.

(57) An apparatus for trimming flash from a workpiece. The apparatus (10) includes a platen (14), an operator (16) including a cylinder having telescoping components for imparting movement to the platen. A plurality of rods (20,22,24,26) for guiding movement and a trimming unit (18) comprising a cavity and a plurality of cutting blades movable into and out of the cavity for trimming flash from the workpiece when presented to the cavity.

./...

EP 0 139 792 A1

Croydon Printing Company Ltd.

FIG. I.

## Description

### Apparatus for Trimming Flash

#### Technical Field

The invention is an apparatus for trimming flash from a workpiece and has special application in trimming flash from around the various openings of a dashboard.

#### Background Art

Apparatus of the type to be described hereafter, and particularly in the description directed to the best mode for carrying out the invention is know to the prior art. One typical prior art representation of structure is that of United States Letters Patent No. 4,106,379 to Spengler. To this end, Spengler describes apparatus for trimming three-dimensional workpieces and discloses a support for the immovable support of the workpiece, and a plurality of trimming units mounted to a frame whereby at least a trimming blade is movable toward the workpiece in directions dictated by the particular angular position of mounting of each trimming unit on the frame.

The prior art also includes apparatus including a frame, a plurality of trimming units supported by the frame and a platform or platen movable from a loading position at which a workpiece may be received to a position at which the workpiece is located to a cavity formed by the trimming units. In this form of apparatus the platen is movable in generally a vertical direction by structure which may be briefly described as a pair of elements supporting the platen at one end and movable about an axis, scissors fashion.

While these prior art apparatus have been used with varying degrees of success they display certain shortcomings which the apparatus of the invention overcomes.

## Summary of the Invention

The apparatus of the invention is an improvement upon the prior art as presently known. To this end, the pparatus of the invention is capable of trimming flash from a workpiece by operation of a plurality of trimming units which generally are stationarily located to form a cavity to which the workpiece is physically presented. As such, the apparatus of the invention is substantially less complex than the Spengler apparatus in structure and operation for the reason, at least, that the trimming units do not require structure for their support and movement into trimming engagement with a workpiece which remains stationarily supported at a loading position.

With regard to the second of the noted prior art, and while the apparatus of the invention may be likened more specifically to that type of structure and operation, the invention provides a significant improvement in the manner and means of moving the platen and in structure for guiding the platen in movement. To this end, the apparatus of the invention employs a pressure cylinder of the type including a telescoping piston acting along the longitudinal axis of the platen in moving the platen from a loading position to a position at which a workpiece is located within a cavity defined by a plurality of trimming units. The apparatus also, employs a guide structure for maintaining the platen throughout its entire path of movement in an orientation substantially normal to the path of movement.

In a preferred embodiment of the invention, the guide structure includes a plurality of rods located at equal radial spacing about the longitudinal axis of the platen, and coaxial therewith, with the platen sliding on the guide rods received through bores in its surface. Generally, the platen will be of rectangular outline and the guide structure may include four guide rods.

The operator and the guide structure provide several advantages in apparatus of the type herein. Specifically the overall height of the apparatus may be reduced through the use of a cylinder having telescoping piston elements. The adaptation of that cylinder to a source of hydraulic fluid is preferred for reason of better operation, particularly in the overcoming of random downward movement of the platen and the workpiece from the cavity. The guide structure, also, provides better operation in the stability of the platen during movement, and the orientation of the guide structure together with that of the cylinder and its action along the longitudinal axis of the platen provides for substantial elimination in binding and better uniformity in movement of the platen.

Brief Description of the Drawing

Figure 1 is a perspective view of the apparatus of the invention;

Figure 2 is a view of the apparatus as seen along the line 2-2 in Fig. 1; and

Figure 3 is a view, likewise in section, of an operator having telescoping components.

Best Mode for Carrying Out the Invention

The apparatus 10 of the invention has general application in cutting or trimming flash from a workpiece. In a specific application, one that will be described as the description continues, the apparatus is adapted to trim flash from around the openings of a dashboard 12, such as a dashboard for a vehicle wherein the openings serve to receive a housing for various operating dials, a case of a radio, an air vent, and so forth.

The dashboard 12 is formed by an insert which may comprise an injected molded base layer or substrate, and superposed layers received on the insert comprising a layer of a vinyl material covering and an interposed cellulose foam layer. The insert, including the several openings, is molded to the final configuration and it is the foam and vinyl layers that are trimmed from about the openings thereby to be substantially coextensive in surface area to that the insert. As indicated, however, the workpiece need not be considered as limited to a dashboard and it may be of any type structure requiring cutting or trimming by a complement of trimming blades.

The apparatus 10 functions to locate the dashboard 12 from a loading position to a position at which a trimming operation may commence and then, after completion of the trimming operation, to return the dashboard to the loading position whereupon the dashboard is removed from the apparatus and replaced by another dashboard so that the cycle of operation may be repeated.

The apparatus includes a platen 14 which may comprise a multilayer unit for support of the dashboard 12, an operator 16 connected to the platen for initiating movement, a series of trimming units 18, and a plurality of rods 20, 22, . . . 26 for guiding the platen in movement.

The apparatus 10, as generally described above and as will be more specifically described below is supported on a frame 28 comprising a top open frame portion 30, a shelf 32, a plurality of stanchions 34, 36 . . . 40 located at the corners of the frame portion and extending vertically to the floor or other supporting surface, and a series of bracket elements for mounting shelf 32. The bracket elements, only the elements 42, 44 and 46 are shown, although a further element is located at the back, left vertical stanchion, are L-shaped in outline and stationarily supported along adjacent edges of the shelf. Support may be welding, for example, although any type of support may be employed. The brackets, likewise, are supported by the respective stanchions at their base. The bracket elements may carry a foot for engaging the supporting surface to provide the apparatus with an additional measure of stability. A further bracket element 50, and a companion element (not shown) of like construction may be located for purposes of support of the shelf 32 along its major dimension.

The frame is illustrated in schematic fashion, only, in that the showing is representative of a host of constructions to provide a supporting function. The frame, further, may be formed of any structural material suitable for carrying out that function.

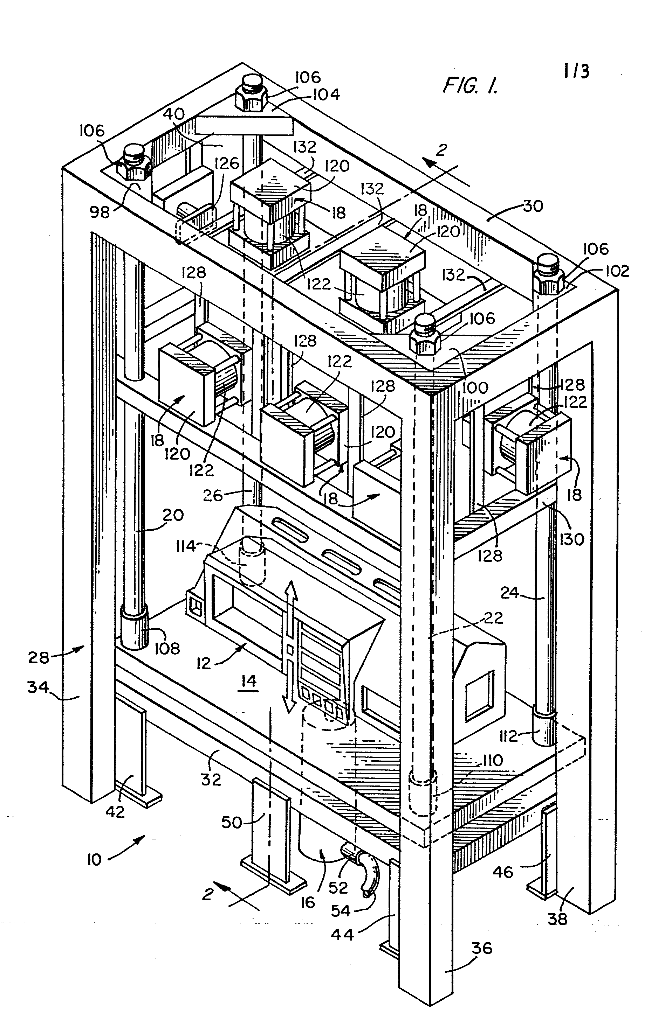

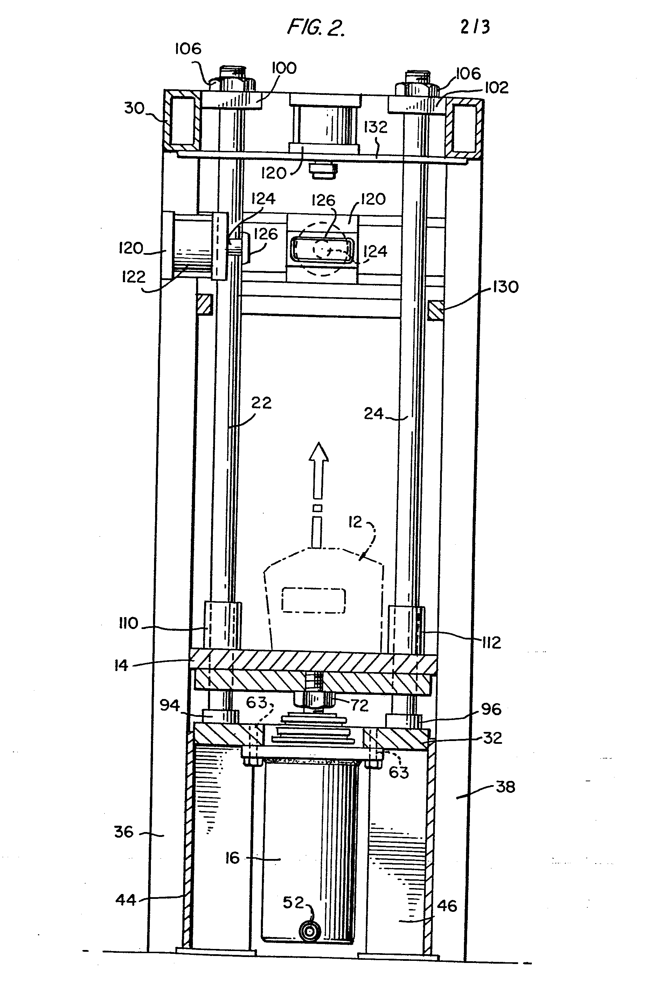

As illustrated in Fig. 1, the dashboard 12 is supported on platen 14 within a cental region. The region is substantially coextensive in area with that of a cavity (see Fig.2) outlined by the series of trimming units 18. The dashboard further, is immovably supported on platen 14 by structure not shown so that the trimming operation may be carried out to completion.

The operator 16 with capacity to extend in stroke throughout a distance which in the present embodiment is greater than the overall length of the operator in a retracted condition provides an important aspect of the invention in the reduction of the overall height of the apparatus.

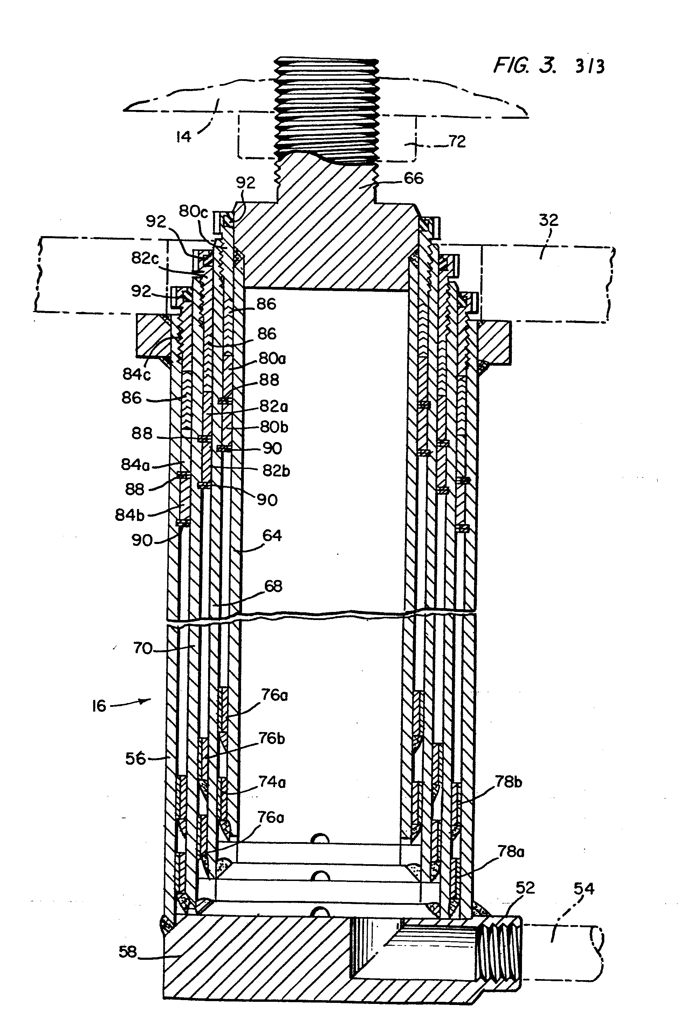

Turning to Fig. 3 operator 16 comprises a cylinder having a port 52 and a line 54 communicating the interior of the cylinder and a source of pressure. The source of pressure is an hydraulic source which has been found to be more effective in the elimination or substantial elimination of random movement of the platen 14 when located to the elevated position for trimming. The source may also be a pneumatic source, or one of similar nature, although the hydraulic source is preferred.

With continued reference to Fig. 3, the cylinder includes a body 56 comprising an outer housing, a base 58 including the port, a flange 60, a piston 62 carrying a sleeve 64 and a neck 66, and a plurality of additional sleeves located between and in concentric relation with both the piston sleeve and the body. The plurality of sleeves may be defined by a pair of sleeves 68, 70. However, as determined by the length of stroke of the piston in movement of platen 14 in a cycle of movement between the loading position of Fig. 1 and a trimming position at which the dashboard 12 is located within the cavity outlined by the series of trimming units 18, either a greater or a lesser number of concentric sleeves may be employed. The cycle of movement of platen 14 is illustrated by the directional arrows (see Figs. 1 and 2).

Flange 60 of operator 16 is connected to shelf 32 and the neck 66 of the piston 62 is connected to platen 14. Any manner of mechanical connection of parts may be resorted to. For example, the flange and shelf may be bolted together by bolts 63 (see Fig. 2), and the neck, illustrated as threaded along its length may be secured to the platen by a nut 72.

When the cylinder is pressurized, piston 62 will move through a vertical stroke in movement of platen 14. As this movement commences the piston and sleeve 64 will move relative to sleeves 68, 70 and body 56 to a stop position. Continuing movement follows a sequence of movement, first of sleeve 68 and then sleeve 70 until there is full extension and the dashboard 12 is located within the cavity.

Each sleeve 64, 68 and 70 carries at least one and preferably a pair of rings 74a, b, 76a, b and 78a, b, respectively, with each ring supporting or providing a bearing surface. The bearing surface, thus, engages the inner surface of an outer sleeve or body throughout a full sequence of movement. A plurality of spacers are supported along a length of the inner surface of the outer sleeves 68, 70 and body 56. The spacers include spacers 80a, b, 82a, b, and 84a, b. A plurality of couplings 80c, 82c and 84c are threaded to the outer sleeves and body above the spacers on each surface, and a packing 86 is located betwee each coupling and a spacer, such as spacer 80a. A retainer comprising a compression ring 88 received in an annular cutout in both the body 56 and the sleeves 68, 70 locates the packing held in compression by the

0139792

-8-

respective couplings as determined by the depth of their threaded receipt. A similar retainer 90 supports the spacer removed from the packing and provides a stop in limiting movement of an inner sleeve.

The sleeves 68, 70 extend somewhat beyond the end of couplings 82c and 84c, respectively, and piston 62 extends somewhat beyond coupling 80c. Each of the couplings include a flange and an inner cutout facing the sleeve 70, for example. A ring 92 such as an O-ring is received in each cutout. The O-ring provides additional sealing for the cylinder.

As the operator 16 is pressurized platen 14 and the dashboard are imparted movement from the loading position of Fig. 1. The line of action of movement of the piston is along the axis of the platen and parallel to the axes of the guide rods 20, 22, . . . to provide complete freedom of movement of the platen.

Each of the guide rods is fixed in its vertical attitude between the top, open frame portion 30 and shelf 32. To this end, a plurality of collars, only the collars 94, 96 are shown, are supported at the corners of the shelf 32 and a plurality of elements 98, 100, . . . 104 are located at the corners of the frame portion. Each guide rod may be threaded throughout a short length at each end for threaded entry into a tapped bore in the collars 94, 96 and so forth, while the other end of each guide rod may be received through a bore in the respective corner elements for securement by a nut 106. A further plurality of collars 108, 110, . . . 114 are supported at the corners of platen 14, in concentric alignment with the collars supported on the shelf for sliding engagement

0139792

-9-

along the guide rods during each complete cycle of movement.

The platen, thus, is supported at its center and moves in sliding engagement along equiradially spaced guide rods.  This overall support provides maximum stability and uniform horizontal movement of the platen and eliminates or substantially eliminates any binding in that movement.

The trimming unit 18 comprises a plurality of individual trimming elements, each of which is supported on the frame 28.  The trimming elements, each of the trimming unit are similar and include a housing 120 and a cylinder 122.  A piston and rod 124 is adapted for movement within the cylinder under control of pressure from a source which may be a pneumatic pressure source for moving a cutting blade 126 relative to the cavity.

The trimming elements, more specifically, are supported by paired straps, such as straps 128 extending vertically between the top, open frame portion 30 and an open frame 130 connecting between each of the stanchions 34, and so forth.  As illustrated in Fig. 1 the open frame 130 includes a plurality of bores in concentric alignment with the bores in platen 14, while the guide rods extend through and are supported by the bores.  A further series of straps 132 are arranged to extend horizontally between elements of the top, open frame portion for supporting the trimming elements at the top of the apparatus.

While not shown, the trimming elements of trimming unit 18 are capable of adjustment thereby to adjust the attitude of the several cutting blades 126 within three dimensional space as determined by the workpiece to operate upon. Further, the cutting blades which may comprise a knife edge are configured to provide the required cut or the required trimming action for the specific workpiece.

The operation of the apparatus is sequentially controlled following a step of locating the workpiece to the platen. In the embodiment illustrated, the workpiece is located to the platen manually, and positioned immovably on the platen. The operation commences as pressure from an hydraulic source is communicated to the cylinder of operator 16. At this time the cavity formed within the trimming unit 18 is open, that is free of obstruction of any cutting blade so that the workpiece 12 may be relocated from the loading position of Fig.1 to the operative position within the cavity.

The hydraulic pressure and the pressurization of the cylinder causes movement of the platen, while the manner of support of the platen assures that the movement is continuous and free of any binding. When the trimming operation has been completed the cylinder of the operator 16 is vented and the platen returns to the loading position under its own weight. During the trimming operation, however, when the workpiece is in the cavity, the platen is immobilized against any random movement. Sequencing of the apparatus controls movement of the cutting blades 126 under control of cylinders 122 substantially simultaneously. The movement is through a stroke of movement toward and away from the workpiece in the trimming of flash. As may be conventional in the art, the cutting blades may be subjected to controlled heat for carrying out the trimming operation.

0139792

-11-

CLAIMS

1. Apparatus for trimming flash from a workpiece comprising a platen adapted to support said workpiece, a plurality of trimming units, said trimming units each including a housing, a cylinder, a movable rod and a trimming blade secured to said rod, a frame for supporting said trimming units in an arrangement about a three-dimensional cavity into which said workpiece may be.moved, pressure means supported by said frame acting along the longitudinal axis of said platen for moving said platen toward said trimming units and said workpiece in said cavity whereby each said cylinder may be actuated for movement of its trimming blade into trimming contact with said workpiece, and a plurality of rods disposed coaxially in relation to said longitudinal axis and at substantially equal radial spacing from said longitudinal axis for guiding said platen in movement.

2. The apparatus of claim 1 wherein said frame includes a pair of spaced stationary members, each said rod supported between said members and said platen comprising a plate having a plurality of bored openings equal in number to the number of rods, said platen received on said rods for sliding movement in a vertical direction.

3. The apparatus of claim 2 wherein said platen comprises a rectangular plate guided in sliding movement along four rods each received through a bore located within the region of a corner of said plate.

4. The apparatus of claim 2 wherein said pressure means comprises a cylinder having an internal chamber, a port adapted to communicate said chamber to a source of pressure, and piston means movable relative to said cylinder under control of pressure from said source.

5. The apparatus of claim 4 wherein said pressure is derived from an hydraulic source.

6. The apparatus of claim 4 wherein said piston means includes a plurality of telescopic elements providing a stroke and movement of said platen throughout a distance greater than the length of said chamber prior to control of said piston means by pressure from said source.

7. Apparatus for trimming flash from a workpiece comprising a platen adapted to support said workpiece, a plurality of trimming units, said trimming units each including a housing, a cylinder, a movable rod and a trimming blade secured to said rod, frame means for supporting said trimming units in an arrangement about a three-dimensional cavity into which said workpiece may be moved, pressure means supported by said frame including a cylinder having an internal chamber, a piston for acting along the axis of said platen for moving said platen toward said trimming units, said piston including a plurality of telescopic elements movable relative to said cylinder under control of pressure from a source, and a port adapted to communicate said chamber and source whereby said telescopic elements provide a stroke and movement of said platen throughout a distance greater than the length of said chamber prior to control of said piston means by pressure from said source, and guide means carried by said frame for guiding said platen in movement.

0139792

-13-

8. The apparatus of claim 7 wherein said pressure is derived from an hydraulic source.

9. The apparatus of claim 7 wherein said guide means includes a plurality of rods disposed coaxially in relation to said longitudinal axis and at substantially equal radial spacing from said longitudinal axis.

10. The apparatus of claim 9 wherein said frame includes a pair of spaced stationary members, each rod supported between said members in a vertical orientation, and wherein said platen comprises a plate having a plurality of bored openings equal in number to the number of rods said platen received on said rods which interact through said bores.

11. The apparatus of claim 1 or 7 wherein said workpiece is a dashboard of a vehicle.

FIG. I.

01-39792

1/3

FIG. 2.

213

0139792

0139792

FIG. 3. 313

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| D,A | US-A-4 106 379 (E.M. SPENGLER) <br> * Abstract; figure 1 * | 1,11 | B 29 C 37/02 |
| A | US-A-3 827 848 (H. MASSONNET) <br> * Column 1, line 56 - column 2, line 6; figure 1 * | 1-5 | |
| A | DE-A-2 349 889 (BENTELER WERKE AG) <br> * Page 1, lines 8-15; apge 3, lines 26-31; figure 1 * | 1,6-8 | |
| A | FR-A-1 263 067 (MASCHINENFABRIK DEUTSCHLAND AG) <br> * Résumé; figure * | 1,6-8 | |
| | ----- | | **TECHNICAL FIELDS SEARCHED (Int. Cl.4)** <br><br> B 29 C 37/02 <br> B 29 F 1/06 <br> B 66 F 3/28 |

The present search report has been drawn up for all claims

| Place of search | Date of completion of the search | Examiner |
|---|---|---|
| BERLIN | 21-05-1984 | SEHLING G S B |